# EUROPÄISCHE PATENTSCHRIFT

(11) **EP 1 925 067 B1**
(45) Veröffentlichungstag und Bekanntmachung des Hinweises auf die Patenterteilung: **21.12.2011**
(21) Anmeldenummer: 06778233.4
(22) Anmeldetag: 15.08.2006
(51) Int. Cl.: H02K 9/06, H02K 1/32, H02K 1/20, H02K 5/20, H02K 9/00, H02K 1/27

(54) **ELEKTRISCHE MASCHINE MIT PERMANENTMAGNETEN**
ELECTRICAL MACHINE HAVING PERMANENT MAGNETS
MACHINE ELECTRIQUE COMPORTANT DES AIMANTS PERMANENTS

(30) Priorität: 16.09.2005 DE 102005044327
(43) Veröffentlichungstag der Anmeldung: 28.05.2008
(73) Patentinhaber: SIEMENS AKTIENGESELLSCHAFT, 80333 München (DE)
(72) Erfinder: KÖRNER, Olaf, 90461 Nürnberg (DE)
(86) Internationale Anmeldenummer: PCT/EP2006/065302
(87) Internationale Veröffentlichungsnummer: WO 2007/031381

(56) Entgegenhaltungen:
- EP-A- 0 766 366
- EP-A2- 1 237 258
- EP-A2- 1 333 561
- DE-A1- 1 488 657
- DE-A1- 19 905 538
- JP-A- 56 117 548

## Beschreibung

Die Erfindung betrifft eine elektrische Maschine mit einem Stator, der axial verlaufende Kühlkanäle im Blechpaket und/oder zwischen dem Stator und einem Gehäuse aufweist und einem Rotor, dessen Blechpaket auf einer Nabenkonstruktion mit Innenbohrung positioniert ist, wobei in oder am Blechpaket Permanentmagnete angeordnet sind.

Elektrische Maschinen, insbesondere elektrische Maschinen mit Permanentmagneten sind darauf ausgerichtet, dass die Permanentmagnete sich auf einem möglichst konstanten Temperaturniveau befinden, da deren Remanenz temperaturabhängig ist. Durch diese temperaturabhängige Remanenz der Permanentmagnete ändert sich der magnetische Fluss der elektrischen Maschine, da sich damit die induzierte Spannung beim Generatorbetrieb und das erzeugbare elektrische Drehmoment im Motorbetrieb verringert.

Bisher werden bei derartigen elektrischen Maschinen Radiallüfter eingesetzt, die aber zu einer axialen Verlängerung der elektrischen Maschine führen. Eine weitere Möglichkeit besteht darin, separate Fremdlüfter einzusetzen, was aber höhere Investitionskosten und einen größeren Bauraum zur Folge hat.

Aus der DE 30 35 775 A1 ist ein dem Stator und dem Rotor nachgeschalteter ansaugender Lüfter bekannt, der die Kühlluft durch die vorhandenen Kühlkanäle saugt. Damit wird aber ebenfalls die elektrische Maschine unnötigerweise axial verlängert.

Die EP 0 766 366 A1 zeigt eine elektrische Maschine mit einem Stator, einem Rotor, dessen Blechpaket auf einer Nabenkonstruktion mit Innenbohrung positioniert ist, wobei im Blechpaket oder am Umfang des Blechpakets des Rotors Permanentmagnete angeordnet sind, wobei zumindest ein Axiallüfter vorgesehen ist, dessen erzeugter Luftstrom nach dem Durchtritt durch den Rotor mittels Strömung durch eine geeignete Vorrichtung eine Düsenwirkung erzielt, die aufgrund des Venturieffekts einen Luftstrom durch einen Luftspalt zwischen Stator und Rotor bewirkt, wobei Kühlluft bei Rotation des Rotors über die axialen Zuluftkanäle mittels Lüfterflügel des Axiallüfters in die Innenbohrung gesaugt und nach Verlassen des Rotors in die Vorrichtung gelenkt wird, wobei die Vorrichtung die im Rotor erwärmte Kühlluft, welche axial aus dem Rotor austritt, in eine radiale Strömung nach außen über Öffnungen lenkt.

Die EP 1 333 561 A2 offenbart einen bürstenlosen Elektromotor mit einem Rotor, dessen Blechpaket auf einer Nabenkonstruktion mit Innenbohrung positioniert ist, und bei dem ein Axiallüfter in der Innenbohrung des Rotors vorgesehen ist.

Ferner zeigt die DE 14 88 657 A1 einen Stator einer elektrischen Maschine, der axial im Blechpaket bzw. zwischen dem Stator und dem Gehäuse verlaufende Kühlkanäle besitzt.

Ausgehend davon liegt der Erfindung die Aufgabe zugrunde, eine elektrische Maschine zu schaffen, die bei kompakter Bauweise eine ausreichende Kühlung, insbesondere des Rotors gewährleistet. Des Weiteren soll das gesamte Temperaturniveau des Rotors auf einer möglichst konstanten Temperatur gehalten werden, um die Temperaturabhängigkeit der Remanenz der Permanentmagnete zu kompensieren.

Die Lösung der gestellten Aufgabe gelingt durch eine elektrische Maschine, mit den Merkmalen gemäß Anspruch 1.

Eine Förderung einer relativ hohen Luftmenge durch den Rotor über die Innenbohrung führt zu einer vergleichsweise guten Kühlung der im Blechpaket oder am Umfang des Rotors angeordneten Permanentmagnete deren Remanenz temperaturabhängig ist. Dadurch wird verhindert, dass sich der magnetische Fluss der elektrischen Maschine mit der Magnettemperatur verändert und sich somit die induzierte Spannung und das erzeugbare elektrische Drehmoment der elektrischen Maschine verringert.

Dies ist insbesondere im Generatorbetrieb der elektrischen Maschine an einem Diodengleichrichter besonders vorteilhaft. Das bedeutet aber im Gegenschluss, dass die elektrische Maschine im Generatorbetrieb auch im Stillstand nicht wirklich abkühlen sollte.

Um zwischen diesen unterschiedlichen Betriebszuständen der elektrischen Maschine eine Temperaturvergleichmäßigung im Rotor und insbesondere an den Permanentmagneten zu erreichen, wird vorteilhafterweise bei der erfindungsgemäßen elektrischen Maschine mit Permanentmagneten mit einem Diodengleichrichter eine zusätzliche elektrische Beheizung des Rotors im Stillstand vorgesehen. Damit wird eine Auskühlung der elektrischen Maschine aufgrund der fehlenden elektrischen Verluste und Eisenverluste im Rotor vermieden.

In einer weiteren Ausführungsform bildet bereits die Nabenkonstruktion mit dafür vorgesehenen angegossenen Rippen die sich in der Innenbohrung des Rotors befinden, einen Axiallüfter aus, der eine axiale Luftströmung in der Innenbohrung des Rotors bewirkt.

Die Innenbohrung des Rotors wird nunmehr durch die Luft durchströmt und am Ende des Rotors radial gegebenenfalls über die wickelköpfe des Stators ausgelenkt. Speziell im Bereich des Stators wird durch eine geeignete Vorrichtung, insbesondere Düsen ein über der Venturieffekt erzielter Unterdruck am diesseitigen Statorende erzeugt, so dass über die vorhandenen Kühlkanäle im Blechpaket des Stators und/oder in Kühlkanälen zwischen dem Stator und einem Gehäuse eine Luftströmung hervorgerufen wird, die zur Kühlung des Stators beiträgt.

Ebenso wird Luft durch den Luftspalt der elektrischen Maschine mittels des Venturieffekts gesaugt, so dass insbesondere bei am Umfang des Rotors angeordneten Permanentmagneten eine effiziente Kühlung erfolgt. Um dabei Anlagerungen von in der Kühlluft vorhandenen magnetischen Partikeln an den Permanentmagneten zu vermeiden ist mechanisch oder elektrisch gefilterte Kühlluft vorgesehen.

In einer besonders bevorzugten Ausführungsform sind in der elektrischen Maschine Temperatursensoren angeordnet, die einen möglichst konstanten Temperaturverlauf der elektrischen Maschine und insbesondere des Rotors selbsttätig einstellen. Dabei werden die Temperaturen im Bereich der Permanentmagnete auf dem Rotor und auf dem Stator erfasst und dementsprechend Kühlluft oder eine elektrische Heizung bereitgestellt.

Die Erfindung sowie weitere vorteilhafte Ausgestaltungen der Erfindung werden anhand eines schematisch dargestellten Ausführungsbeispiels näher erläutert.

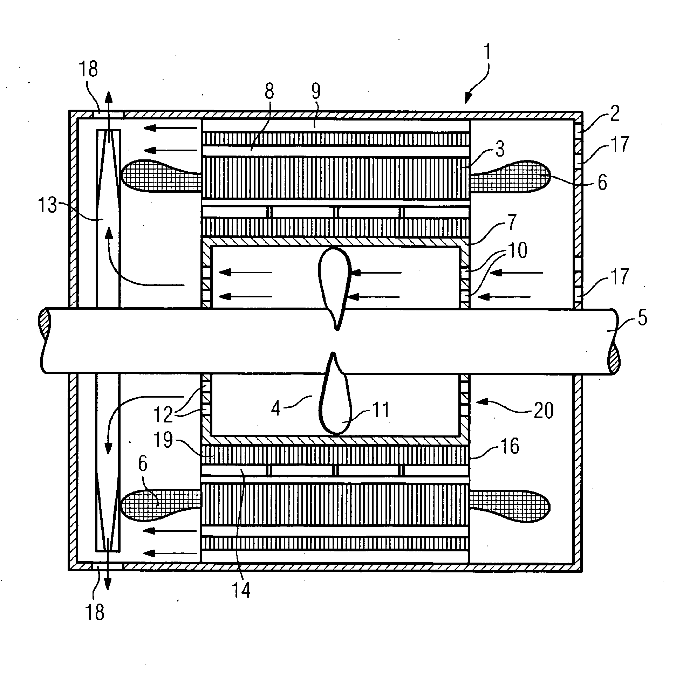

Die Figur zeigt eine schematisch dargestellte elektrische Maschine 1, insbesondere eine permanenterregte Synchronmaschine, die in einem Gehäuse 2 untergebracht ist. Die elektrische Maschine weist einen Stator 3 auf, der in seinen Nuten ein Wicklungssystem aufweist, das an den Stirnseiten des Stators 3 Wickelköpfe 6 ausbildet. Das Wicklungssystem ist insbesondere ein dreiphasiges Wicklungssystem, wobei sowohl die klassischen Wicklungstechniken, d.h. gesehnte Wicklungen als auch Zahnspulen eingesetzt werden können.

Als Zahnspulen werden Spulen bezeichnet, die jeweils nur einen mechanischen Zahn des Stators 3 umfassen. Der Stator 3 ist geblecht ausgeführt, und weist im Wesentlichen axial verlaufende Kühlkanäle 8 auf. Zwischen Gehäuse 2 und dem Stator 3 sind ebenfalls Kühlkanäle 9 vorgesehen, die aber in einer weiteren Ausführungsform und zum Verständnis der Funktion der Erfindung nicht unbedingt erforderlich sind.

Eine Welle 5 weist eine Nabenkonstruktion 7 auf, an der ein Blechpaket 19 mit den an sich bekannten Befestigungsmethoden z.B. aufschrumpfen, an der Nabenkonstruktion 7 fixiert ist.

Vorteilhafterweise sind mehrere axial parallel verlaufende Bohrungen vorhanden.

Das Blechpaket 19 des Rotors 20 weist an seinem Außenumfang Permanentmagnete 14 auf, die durch geeignete Befestigungsmittel z.B. Kleber und/oder eine Bandage 16 am Rotor 20 fixiert werden.

In einer anderen Ausführungsform sind die Permanentmagnete 14 im Rotor 20 innerhalb des Blechpakets 19 angeordnet, es liegen also vergrabene Permanentmagnete 14 vor.

Die Nabenkonstruktion 7 ist hohl ausgeführt, derart, dass innerhalb des Hohlraumes Mittel vorhanden sind, die eine axiale Luftströmung im Betrieb der elektrischen Maschine schaffen. Diese Belüftungsmittel sind Lüfterflügel 11, die bei Rotation des Rotors 20 Luft über die Zugluftkanäle 17 in den Maschinenraum und damit in die Innenbohrung saugen. Damit ist zumindest ein Axiallüfter 4 in der Innenbohrung des Rotors 20 geschaffen. Die Luftströmung über die Kühlkanäle 10 und 12 des Rotors 20 sorgt für eine ausreichende Belüftung und Temperierung der Permanentmagnete 14 des Rotors 20.

Der Axiallüfter 4 kann sowohl für Fremdbelüftung als auch für Eigenbelüftung ausgelegt sein. Im Falle der Eigenbelüftung sind lüfterflügelähnliche Mittel als Teil des Hohlraums der Nabenkonstruktion ausgebildet.

Durch die erfindungsgemäße Konstruktion wird eine konstante Remanenz der Permanentmagnete 14 geschaffen, die sich vorteilhaft auf den Verlauf der induzierten Spannung und das Drehmomentverhalten der elektrischen Maschine 1 auswirkt. Der Kühlluftstrom wird nach Verlassen des Rotors 20 in eine Vorrichtung 13 gelenkt, in der die im Rotor 20 erwärmte Kühlluft von ihrem axialen Austritt aus dem Rotor 20 in eine radiale Strömung nach außen über Öffnungen 18 gelenkt wird.

Durch die erhöhte Strömungsgeschwindigkeit des austreten Kühlluftstroms wird aufgrund des Venturieffekts eine Sogwirkung erzeugt, die einen weiteren Kühlluftstrom durch den Kühlkanal 8 und gegebenenfalls Kühlkanal 9 strömen lässt und so gleichzeitig eine Kühlung des Stators 3 bewirkt.

Ein derartiges Kühlkonzept ist insbesondere für elektrische Maschinen, die als Generator eingesetzt werden und für die eine exakte Temperaturkonstanz notwendig ist, vorteilhaft. Dies gilt beispielsweise für elektrische Triebfahrzeuge und dabei insbesondere für Diesellokomotiven.

## Patentansprüche

1. Elektrische Maschine (1) mit
- einem Stator (3), der axial verlaufende Kühlkanäle (8) im Blechpaket und/oder zwischen dem Stator und einem Gehäuse verlaufende Kühlkanäle (9) aufweist,
- einem Rotor (20), dessen Blechpaket (19) auf einer Nabenkonstruktion (7) mit Innenbohrung positioniert ist,
- wobei im Blechpaket oder am Umfang des Blechpakets (19) des Rotors (20) Permanentmagnete (14) angeordnet sind,
- wobei zumindest ein Axiallüfter (4) in der Innenbohrung des Rotors (20) vorgesehen ist, dessen erzeugter Luftstrom nach dem Durchtritt durch den Rotor (20) mittels Strömung durch eine geeignete Vorrichtung (13) eine Düsenwirkung erzielt, die aufgrund des Venturieffekts einen Luftstrom sowohl durch die in dem Stator (3) angeordneten Kühlkanäle (8), als auch durch einen Luftspalt zwischen Stator (3) und Rotor (20) bewirkt,
- wobei Kühlluft bei Rotation des Rotors über die axialen Zuluftkanäle (17) mittels Lüfterflügel (11) des Axiallüfters (4) in die Innenbohrung gesaugt und nach Verlassen des Rotors in die Vorrichtung (13) gelenkt wird, wobei die Vorrichtung (13) die im Rotor (20) erwärmte Kühlluft, welche axial aus dem Rotor austritt, in eine radiale Strömung nach außen über Öffnungen (18) lenkt,
- wobei eine mechanische oder elektrische Filterung der Kühlluft derart vorgenommen wird, dass Anlagerungen von in der Kühlluft vorhandenen magnetischen Partikeln an den Permanentmagneten vermieden werden.

2. Elektrische Maschine (1) nach Anspruch 1, **dadurch gekennzeichnet, dass** der Axiallüfter (4) Teil der Nabenkonstruktion (7) ist, d.h. dass Axiallüfter (4) und Nabenkonstruktion (7) ein Stück bilden.

3. Elektrische Maschine (1) nach Anspruch 2, **dadurch gekennzeichnet, dass** der Axiallüfter (4) durch Gestaltung der Innenbohrung, beispielsweise durch schrägstehende Schaufeln (11) realisiert ist.

4. Elektrische Maschine (1) nach einem der vorhergehenden Ansprüche, **dadurch gekennzeichnet, dass** der Stator (3) eine zusätzliche Wassermantelkühlung aufweist.

5. Elektrische Maschine (1) nach einem der vorhergehenden Ansprüche, **dadurch gekennzezchnet**, dass der Rotor (20) eine zusätzliche elektrische Heizung aufweist, die im Blechpaket (19) angeordnet ist.

6. Elektrische Maschine (1) nach einem der vorhergehenden Ansprüche 1 bis 4, **dadurch gekennzeichnet, dass** Temperatursensoren am Rotor (20) und/oder am Stator (3) die Temperatur der Permanentmagnete (14) und weiterer Heißpunkte der elektrischen Maschine (1) erfassen und eigenständig eine Heizung oder Kühlleistung dementsprechend bewirken.

7. Elektrisches Triebfahrzeug, insbesondere Diesellokomotive, umfassend eine elektrische Maschine nach einem der vorhergehenden Ansprüche.

## Claims

1. Electrical machine (1) having
- a stator (3) which has axially running cooling channels (8) in the laminated core and/or has cooling channels (9) running between the stator and a housing,
- a rotor (20) whose laminated core (19) is positioned on a hub structure (7) with an internal hole,
- with permanent magnets (14) being arranged in the laminated core or on the circumference of the laminated core (19) of the rotor (20),
- with at least one axial fan (4) being provided in the internal hole in the rotor (20), whose air flow that is produced achieves a nozzle effect by flowing through a suitable apparatus (13) after passing through the rotor (20),
which, as a result of the Venturi effect, produces an airflow both through the cooling channels (8) which are arranged in the stator (3) and through an air gap between the stator (3) and the rotor (20),
- with cooling air being sucked into the internal hole by means of fan blades (11) of the axial fan (4) via the axial supply channels (17) during rotation of the rotor and being passed into the apparatus (13) after leaving the rotor, with the apparatus (13) guiding the cooling air which has been heated in the rotor (20) and emerges axially from the rotor into a radial outward flow via openings (18),
- with mechanical or electrical filtering of the cooling air being carried out such that deposits of magnetic particles, which are present in the cooling air, on the permanent magnets are prevented.

2. Electrical machine (1) according to Claim 1, **characterized in that** the axial fan (4) is part of the hub structure (7), that is to say the axial fan (4) and the hub structure (7) are integral.

3. Electrical machine (1) according to Claim 2, **characterized in that** the axial fan (4) is provided by the configuration of the internal hole, for example by angled blades (11).

4. Electrical machine (1) according to one of the preceding claims, **characterized in that** the stator (3) has additional water jacket cooling.

5. Electrical machine (1) according to one of the preceding claims, **characterized in that** the rotor (20) has additional electrical heating, which is arranged in the laminated core (19).

6. Electrical machine (1) according to one of the preceding Claims 1 to 4, **characterized in that** temperature sensors on the rotor (20) and/or on the stator (3) record the temperature of the permanent magnets (14) and of further hot spots on the electrical machine (1) and autonomously provide appropriate heating or cooling power.

7. Electric locomotive, in particular a diesel locomotive, comprising an electrical machine according to one of the preceding claims.

## Revendications

1. Machine ( 1 ) électrique comprenant
- un stator ( 3 ), qui a des canaux ( 8 ) de refroidissement s'étendant axialement dans le paquet de tôles et/ou des canaux ( 9 ) de refroidissement s'étendant entre le stator et un carter,
- un rotor (20), dont le paquet (19) de tôles est positionné sur une construction ( 7 ) formant moyeu et ayant un alésage intérieur,
- dans lequel des aimants ( 14 ) permanents sont disposés dans le paquet de tôles ou sur le pourtour du paquet ( 19 ) de tôles du rotor ( 20 ),
- dans lequel il est prévu dans l'alésage intérieur du rotor ( 20 ) au moins un ventilateur ( 4 ) axial, dont le courant d'air produit donne, après le passage dans le rotor ( 20 ), au moyen d'un écoulement dans un dispositif ( 13 ) approprié, un effet de buse, qui, en raison de l'effet venturi, provoque un courant d'air à la fois dans les canaux (8) de refroidissement disposés dans le rotor (3) et dans un entrefer entre le stator ( 3 ) et le rotor ( 20 ),
- dans lequel de l'air de refroidissement est, lors de la rotation du rotor, aspiré dans l'alésage intérieur par l'intermédiaire des canaux ( 17 ) axiaux d'afflux d'air au moyen des pales ( 11 ) du ventilateur ( 40 ) axial et, après avoir quitté le rotor, est dévié dans le dispositif ( 13 ), le dispositif ( 13 ) déviant, par des ouvertures (18) en un écoulement radial vers l'extérieur, l'air de refroidissement qui est réchauffé dans le rotor et qui sort axialement du rotor,
- dans lequel une filtration mécanique ou électrique de l'air de refroidissement est effectuée, de manière à empêcher sur les aimants permanents des dépôts de particules magnétiques présentes dans l'air de refroidissement.

2. Machine (1) électrique suivant la revendication 1, **caractérisée en ce que** le ventilateur ( 4 ) axial fait partie de la construction ( 7 ) formant moyeu, c'est-à-dire **en ce que** le ventilateur ( 4 ) axial et la construction ( 7 ) formant moyeu forment une pièce.

3. Machine ( 1 ) électrique suivant la revendication 2, **caractérisée en ce que** le ventilateur ( 4 ) axial est réalisé par conformation de l'alésage intérieur, par exemple par des aubes ( 11 ) inclinées.

4. Machine ( 1 ) électrique suivant l'une des revendications précédentes, **caractérisée en ce que** le stator ( 3 a un refroidissement supplémentaire par l'enveloppe à eau.

5. Machine ( 1 ) électrique suivant l'une des revendications précédentes, **caractérisée en ce que** le rotor ( 20 ) a un chauffage électrique supplémentaire, qui est disposé dans le paquet ( 19 ) de tôles.

6. Machine ( 1 ) électrique suivant l'une des revendications précédentes, **caractérisée en ce que** des capteurs de température sur le rotor ( 20 ) et/ou sur le stator ( 3 ) relèvent la température des aimants ( 14 ) permanents et d'autres points chauds de la machine ( 1 ) électrique et donnent lieu, en conséquence de manière autonome, à un chauffage ou à une puissance de refroidissement.

7. Véhicule de traction électrique, notamment locomotive diesel, comprenant une machine électrique suivant l'une des revendications précédentes.
